# EUROPEAN PATENT SPECIFICATION

(11) **EP 0 774 108 B1**
(45) Date of publication and mention of the grant of the patent: **16.09.1998**
(21) Application number: 95924488.0
(22) Date of filing: 25.07.1995
(51) Int. Cl.: G01G 17/02, G01G 1/24, G01G 1/26, D21H 23/78

(54) **DEPOSITION SENSING METHOD AND APPARATUS**
VERFAHREN UND VORRICHTUNG ZUR FESTSTELLUNG VON ABLAGERUNGEN
PROCEDE ET APPAREIL DE DETECTION DE DEPOT

(30) Priority: 02.08.1994 GB 9415585
(43) Date of publication of application: 21.05.1997
(73) Proprietor: BetzDearborn Inc, Trevose, PA 19053-6783 (US)
(72) Inventor: MERCUSOT, Michel, B-1640 Rhode St. Genese (BE); DECLERCQ, Ghislain, B-8740 Pittem (BE)
(74) Representative: Barlow, Roy James
(86) International application number: IB9500585
(87) International publication number: WO9604529

(56) References cited:
- EP-A- 0 493 066
- GB-A- 1 087 475
- GB-A- 2 135 352
- GB-A- 2 227 316
- US-A- 4 095 658
- US-A- 4 553 137
- US-A- 5 155 555
- DATABASE WPI Section PQ, Week 8821 Derwent Publications Ltd., London, GB; Class Q75, AN 88-140945 & DD-A-252 872 , (VEB MASCH HALLE) , 30 December 1987
- TAPPI JOURNAL, vol. 70, no. 1, Atlanta US, pages 43-45; A.M. SPRINGER et al.: 'Fundamental strategy for control of retention and drainage on a modern paper machine'

## Description

The present invention relates to a method of and apparatus for sensing the build-up of deposition, in particular in locations which are not readily accessible for manual observation.

The process is particularly useful for monitoring the build-up of deposit in contaminated industrial water, for example in cooling water circuits, boiling water enclosures, and paper pulp machinery to give but a few examples. Another application is in smoke stack soot monitoring. In each case the method and apparatus enable one or more deposition-controlling composition to be applied in an appropriate dose.

Many industrial processes suffer from formation of deposit on surfaces. This deposit could be of microbiological origin in equipment such as Evaporative Cooling Towers, water boilers, or machines in the paper making industry, but could also be formed by precipitation of inorganic materials (scaling) or deposition of adhesives, ink, etc, ... in recycled papermaking processes.

It is known to monitor the build-up of a deposit by providing a surface on which the film is allowed to build up and then periodically moving that surface to a location where it can be observed in order to evaluate the degree of build-up. Such a system is disclosed in US-A-5,155,555 (Nalco Chemical Company).

Another approach has been to monitor the acquisition of moisture by a piezoelectric crystal by observing the change in the resonant frequency when the crystal is subject to electrical excitation. Such a system is disclosed in US-A-4,562,725. The alteration of the properties of the crystal resulting from the presence of moisture is unique to the action of water in the crystal and consequently this action would be thought unsuitable for monitoring deposits containing small amounts of water.

Yet a further approach, which can be used with a solid build-up if a substantial build-up is expected, is disclosed in DD-A-2,52872 in which the accretion of ice in an evaporator is monitored, for purposes of triggering defrosting of the evaporator, by measuring the bending stress on a cantilever support for the evaporator.

GB-A-1087475 and US-A-4553137 both monitor the build-up of ice on an aircraft by having an exposed part of a detector probe in the region where ice is to build up, and then driving the probe for longitudinal vibrations by a magnetostrictive effect in order to detect the build-up of ice as a function of the changes in the resonant frequency of the vibrating probe due to the loading of the ice thereon.

GB-A-2227316 discloses a dust monitor in which dust is allowed to deposit on a piezoelectric crystal in the drive circuit to a vibrator, whereby the amount of dust on the crystal affects the driving of the vibrator to change the frequency of the vibrator, and hence measurement of the vibrator frequency gives an indication of the quantity of dust present.

It is an object of the present invention to provide a means of sensing the build-up of deposition on the surfaces of an industrial installation, without the need for visual observation of the deposit.

It is a further object of the present invention to provide a sensor for sensing the build-up of deposit by simple response to the change in mass of the sensor without the need to provide means for driving the sensor in vibration.

Accordingly, one aspect of the present invention provides a method of measuring the build-up of deposit, comprising mounting an elongate probe to project into a region where the build-up will appear; balancing the probe about a pivot in the absence of deposit on the projecting probe; allowing the deposit to build up on the projecting portion of said probe; and sensing lateral deflection of said projecting portion of the probe at said pivot by changing strain on a flexible member caused to flex by the imbalance generated in said probe as a result of the deposit thereon, to detect variations in the mass of said probe as being indicative of the build-up of said deposit on the projecting portion of the probe.

A further aspect of the present invention provides a sensor for determining the build-up of a deposit in industrial equipment, comprising:- an elongate probe adapted to be installed with a distal end projecting into a region of the equipment where monitoring is to be effected; a pivot support for said probe; a flexurally deformable member arranged to be strained flexurally by pivoting of said probe about said pivot support; at least one strain gauge for measuring the flexural strain of said flexurally deformable member in response to the weight of the probe and any accretion of deposit built up thereon; and means for monitoring the magnitude of the flexural strain continuously through the life of the plant.

In order that the present invention may more readily be understood, the following description is given, merely by way of example, with reference to the accompanying drawings in which:-
FIGURE 1 is a schematic side view of a paper mill in which, for example, the sensing method and apparatus of the invention can be usefully employed;
FIGURE 2 is a side elevational, partly sectional view of a first embodiment of sensor in accordance with the present invention;
FIGURE 3 is a view of part of the output circuitry to eliminate the influences of machine vibrations on the output signal from the sensor;
FIGURE 4 is a sectional view of a second embodiment of sensor in accordance with the present invention; and
FIGURE 5 is a view showing the mounting diaphragm of the sensor of Figure 4.

Referring now to the drawings, which exemplify the invention in terms of monitoring of build-up of pulp and other particles with a biological film in paper making equipment, there will be seen only one possible application for the present invention. Various other applications are possible, as indicated above.

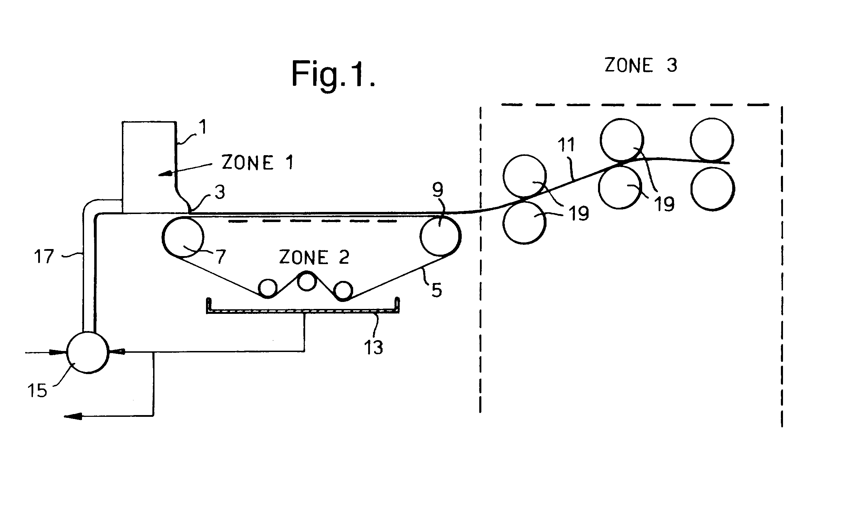

The precise nature of the environment in which the deposition sensing method and apparatus of the present invention are capable of being applied is not crucial to the present invention and thus the illustration, in Figure 1, of a single application in the form of a paper making installation is considered adequate to illustrate the use of the invention.

Furthermore, although in the present context the sensing of the build-up of a biological film deposit in paper making machinery is taken as the downline control which can be exercised as a result of the signal resulting from the method and apparatus of the invention, it will be understood that other downline control operations may be exercised as a result of the use of the invention. For example, where the probe is sensing the build-up of scale in a boiler water circuit or an evaporative water cooling installation the downline operation to be carried out in response to the signal from the process and apparatus of the invention may be the addition of a composition for dispersing and/or preventing scale deposits in the water; and where the probe is monitoring the build-up of soot in a smoke stack the downline operation may comprise the timing of periodical soot blowing operations or the addition of soot-dispersing compositions. This concept can be extended to any other industrial application in which the probe is used to measure the deposit of build-up over a period of time.

Referring now to the papermaking equipment shown in the drawings, Figure 1 shows the headbox 1 which supplies a pulp suspension at 3 to the wire 5 which is guided through a settling zone defined between wire supporting rolls 7 and 9 over a zone 2 through which water and tiny pulp particles from the forming paper web 11 on the wire will fall, eventually to be caught by a wire pit 13 from which the recovered liquid can be recycled into the headbox by way of a pump 15 and recycle pipe 17.

The paper web 11 is then passed through press zone 3 over press rolls 19 which serve to remove the water.

It is known that there are tendencies of deposition of various components in zone 1 within the headbox, and which can tend to cause an undesirable build-up at the outlet from the headbox 1, and also in the zone 2 region below the horizontal run of the wire on which the wet pulp begins its de-watering treatment as well as in the press section zone 3.

The build-up of pulp particles and of deposit in these three zones can upset the stable operation of the paper making process and it is therefore desirable to control the build-up of deposit using a chemical treatment by adding one or more controlling composition to the wet pulp going to the headbox 1. Excessive doses of these treatment chemicals will mar the quality of the finished paper web 11, and will be unnecessarily expensive but equally insufficient dosage will allow the deposit to build up to an extent where it fragments from the inner surfaces of the headbox and of the de-watering zone and possibly appears as defects and sometimes causes holes in the finished paper web 11. It is therefore important to be able to control the build-up of deposit at all times, so that there is no excessive build-up but equally no excessive dosing of chemicals to counter that build-up.

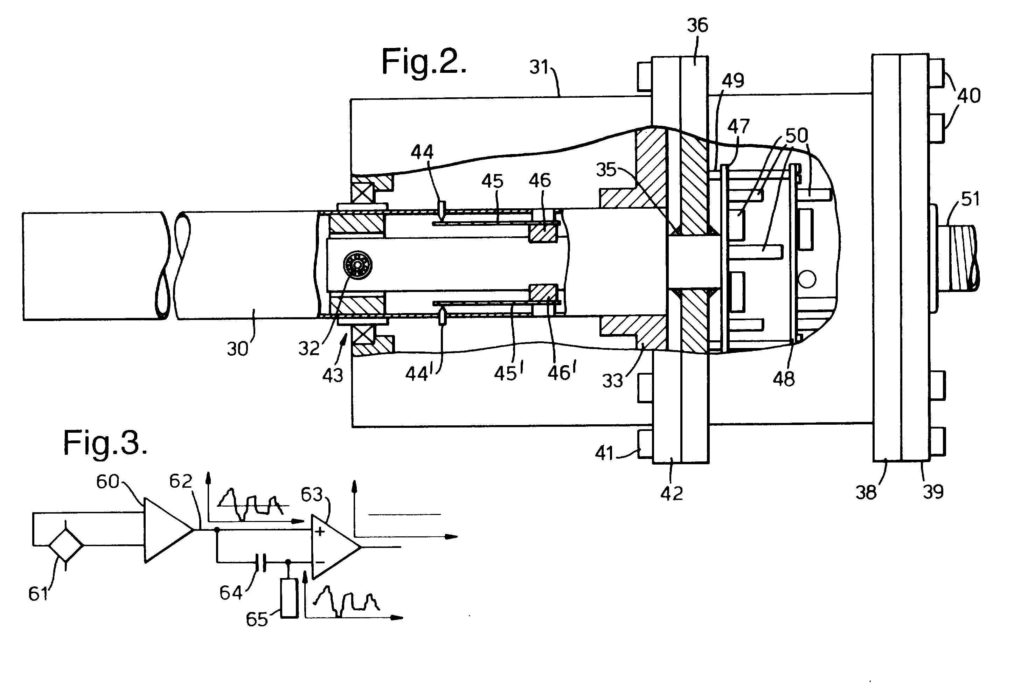

In order to monitor the build-up of the deposit, we now propose to incorporate at a location within the papermaking machine, for example within the de-watering zone 2, at least one sensor of the type shown in Figure 2.

Figure 2 shows a first embodiment of the sensor as comprising an elongate probe 30 in the form of a stainless steel tube, mounted in a mounting body 31 by means of a pivot bearing 32 at the centre of gravity of the probe. The part of the probe to the left of the bearing 32 is shown foreshortened, whereas the portion to the right of the bearing is shown in its full length, and this comprises at its end a counterbalance mass 33 in order to ensure that when the probe 30 is free of any external deposit it will balance exactly around the bearing 32 which is nearer one end of the tube. When the exposed left hand part of the probe 30 becomes laden with a deposit, that part will be heavier and the probe will tend to settle with the left hand side low.

The bearing is carried by an inner rod 34 which is welded at 35 to a carrier disc 36 itself integral with a rear housing portion 37 enclosing the electrical connections and part of the circuitry for the sensor output.

The opposite end of the rear housing portion 37 has an integral external flange 38 to which a cover 39 is secured by bolts 40. Likewise the mounting body portion 31 is secured to the carrier disc 36 by way of mounting bolts 41 clamping an end flange 42 of the mounting body 31 to the carrier disc 36 of the rear body portion 37.

Surrounding the centre of gravity of the tubular probe 30, at the same axial station as the bearing 32, is an external seal arrangement 43 to prevent ingress of the materials borne by the atmosphere around the left hand part of the probe 30 from entering the interior of the mounting body portion 31.

Upper and lower adjusting screws 44 and 44', respectively, are threadedly engageable in the wall of the stainless steel tube defining the probe 30 and are in register with the tips of upper and lower spring blades 45, 45' which are carried by the inner rod 34 by means of upper and lower mountings 46 and 46', respectively.

Within the rear housing portion 37 at the right hand end of the mounting body portion are two printed circuit boards 47 and 48 which are carried by an array of mounting studs 49 threadedly engageable in the carrier disc 36. These printed circuit boards carry the necessary circuit elements, schematically illustrated at 50, to form the output circuitry of the sensor.

The output signal is conveyed to an external control unit, which may be effective to control the dosage of deposit-inhibiting or -controlling compositions by way of a conduit 51 providing a waterproof seal to the rear housing portion 37 by way of its cover 39.

The spring blades 45 and 45' each carry strain gauges (not shown) to measure the flexural strain on the respective blades, thereby allowing the amplitude of displacement of the probe from the horizontal position to be measured (in terms of the flexural strain on one or other of the blades). For example, when the probe tilts in the anti-clockwise direction as viewed in Figure 2 the adjustment screw 44' will rise to deflect the left hand end of the spring blade 45' upwardly, thereby generating strain on the strain gauges associated with the blade 45'.

Assuming that the upper adjuster screw 44 has been adjusted so that it just touches the left hand tip of the upper blade 45 then the increased bending on lower spring blade 45' may occur simultaneously with a slight relaxation of the bending on the upper spring blade 45, giving confirmation of the signal. This may be particularly relevant if the balance of the probe 30 is not precise, in which case slight residual flexure on the upper blade 45 may be necessary in order to retain the probe in the horizontal position when free of deposit.

Clearly the distance between the screws 44, 44' on the one hand and the bearing 32 on the other hand is much shorter than the total length of the probe 30 projecting (leftwardly), into the region where the build-up is expected, so when such a build-up forms on that projecting part of the probe 30 the average moment arm of the build-up about the axis of rotation of the bearing 32 will be much greater than the moment arm of the point of application of the force from the spring blades 45, 45' on the associated adjustment screw 44, 44' on the probe. Hence the effect of the force contributing to the total moment of the deposit to the lefthand side of the axis of bearing 32 will be magnified by virtue of the much shorter moment arm of the force at the screw 44. This force magnification effect allows a relatively small deposit on the projecting portion of the probe 30 to be amplified in its application to the spring blades 45 and 45', making this probe particularly suitable for measuring small deposits.

Furthermore, the flexibility of the blades 45 and 45' results in their receiving appreciable flexural deformation as a result of the force applied from the screw 44 or 44', such that the signal from the strain gauge on the flexurally strained blade 45 or 45' will have an easily detectable output which can be measured in milliamps.

The system thus relies on a freely pivotable probe statically balanced in the absence of any deposit thereon and caused to pivot (substantially without flexural deformation of the probe) in response to the acquisition of a build-up so as to deflect a resilient member under strain in response to the effect of the build-up.

Bearing in mind the free pivotal mounting of the probe 30 in Figure 2, it may be important to eliminate the effects of any general machine vibrations from this form of sensor and for that purpose the circuitry of Figure 3 may be useful. This comprises an amplifier 60 connected across opposite sides of a measuring bridge 61 so that imbalance in the bridge will give rise to imbalance on the inputs of the amplifier and the difference can then be amplified at the amplifier output 62. This output signal is applied directly to one input of a differential amplifier 63 and a tapping from the output is taken through a RC network comprising a capacitor 64 and a resistor 65, with the result that the transient component of the output signal from the first amplifier 60 remains on the second input of the differential amplifier 63 while the static component is reduced to zero. Thus, the output of the differential amplifier will subtract the two input signals to eliminate the transient component and to leave the static component. In practice, such a circuit has been found to give an attenuation of -80 db in the vibration-responsive (transient) component of the signal.

In the preferred form of the sensor the probe may be associated with a further transducer in the form of an analyser cell which reacts in response to the composition of the deposit. Such a further cell may, for example but not necessarily, be mounted on the exterior of the probe. In the case of such a further cell the deposit monitoring sensor can detect not only the quantity of deposit but also its nature, (biological, inorganic ...) in order that the deposit-controlling composition introduced into the headbox 1 will be appropriate for the predominant constituent of the deposit growth being controlled.

Thus, in the present sensor one of the circuit boards 47 and 48 may be connected to this analyser cell.

The analyser cell may, for example, work on the basis of a voltage differential responsive to the chemical action of the deposit thereon, or as a result of change in capacitance of the cell in response to the nature of a build-up thereon, or may work in response to biological oxygen demand.

The outlet leads from the respective printed circuit boards 41 and 43 may be connected to appropriate pins of a multi-pin connector (not shown).

The sensor shown in Figure 2 is suitable for use in many environments but, where only a small build-up of deposit is expected, it may be advantageous to use a modified monitoring head in which the cantilever probe 30 is extended outwardly (towards the right in Figure 2) so that the strain gauge 33 is positioned near the midpoint of the probe 30 to give a substantially balanced configuration when there is no deposit present on the left hand half of the sensor probe. When, in this case, deposit builds up on the left hand half of the probe, the signal sensed by the strain gauges will no longer be in equilibrium and the effect of the growth of deposit on the left hand part of the probe will be more noticeable as a departure from a zero signal.

The turning moment causing the probe to displace from its rest position when free of deposit will be affected more greatly by build-ups of deposit remote from the pivot than by such a build-up closer to the pivot. The elongate nature of the probe allows for this possibility of accretion of build-up displaced from the probe pivot.

In some environments there may be a greater tendency for accretion of build-up than in others, and equally in some machines there may be space for a longer probe than in other machines. It is therefore envisaged that the length of the probe may be adjustable in order to allow the probe to be tailor-made for a particular machine. This adjustment may be achieved either by providing a single probe of variable length or, more preferably, by providing a range of probes of which an appropriate one can be selected in order to suit the characteristics of the machine in question.

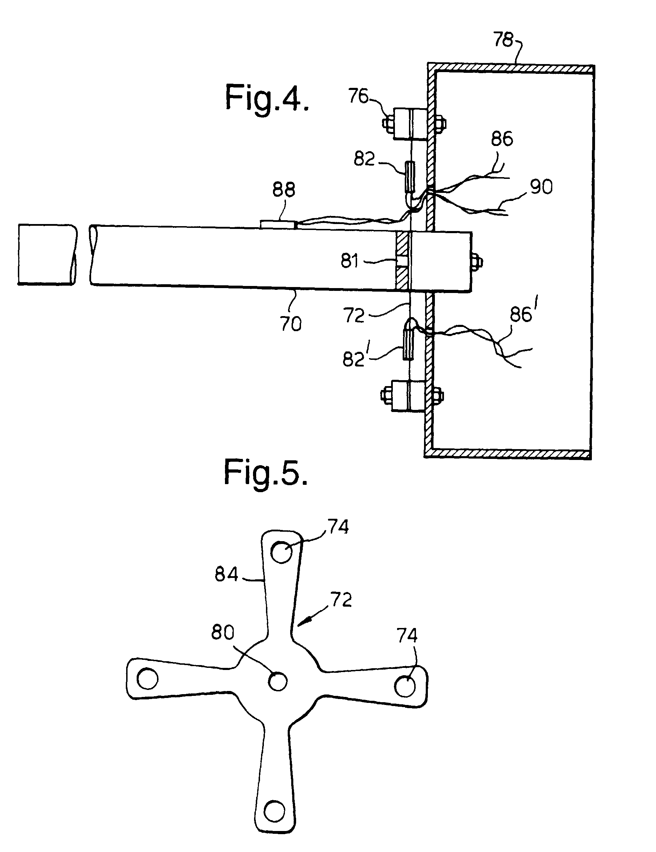

An alternative embodiment of the probe is illustrated in simplified form in Figure 4. Here the probe 70, again in the form of a hollow stainless steel tube. In this case the mount for the probe is a cruciform diaphragm 72 which is shown in side view in Figure 4 but is shown in frontal view in Figure 5. Each of the four limbs of the diaphragm 72 includes a hole 74 to receive a mounting screw 76 which clamps the end of that limb of the diaphragm to a mounting body 78. Similarly the centre of the mounting diaphragm includes a hole 80 for receiving a mounting stud 81 at the preferably solid proximal end of the probe 70 and the tension in the various limbs of the cruciform mounting diaphragm 72 result in the probe 70 being substantially horizontal in its rest condition. Strain gauges 82 and 82' on the upper and lower vertical limbs 84 and 84', respectively, of the mounting diaphragm 72 provide signals, by way of connecting leads 86, 86' indicative of the loading on the probe in that when the probe tilts in the anti-clockwise direction (by drooping of the distal end of the probe 70) the limbs 84 and 84' will tend to flex and as a result there will be a change in strain to be measured by the strain gauges 82.

With the strain gauges 82 placed in the relatively short limbs 84 of the diaphragm and hence close to the point of clamping of the diaphragm between the hollow (leftwardly) projecting portions of the probe 70 and the counterbalancing solid section to the right of the diaphragm, the effect of the force of the uniformly distributed build-up along the probe 70 due to the moment arm of the build-up which is balanced by an excess in the flexural deformation of the limbs 84 over and above the deformation which will occur when an unloaded probe 70 is supported by the diaphragm will be such as to magnify the effect of that force due to the mass of the build-up and to generate an electrical output signal from the strain gauges 82, 82' which is readily readable in terms of milliamps as a result of a typical thin film deposit on the probe 70. Again there is a force magnifying effect due to the long moment arm on the probe 70 and the short length of the limbs 84 of the diaphragm.

The embodiment of probe in Figure 4 is analogous in its mounting to the embodiment of Figure 2 in that here again the probe is substantially without flexural deformation of its own but is mounted in a statically balanced configuration in the absence of a build-up, and has a portion of the probe extending into the region where build-up is expected and being mounted such that flexing of the flexible strain gauge-bearing member results from an out-of-balance of the probe resulting from build-up distributed over the projecting part.

The horizontal limbs of the diaphragm 72 serve simply to enhance the mounting of the probe 70 but during loading of the probe with deposit to increase the weight of the probe these horizontal limbs will not be deflected. They may, however, be subject to deflection in the event of machine vibration in a horizontal direction and it is therefore possible to use this vibration-responsive flexure to measure the resonant frequency of the combination of the probe 70 with deposit thereon if additional strain gauges are attached to the horizontal limbs.

This particular embodiment shows the optional additional cell 88 with its connector leads 90, this cell serving to detect the nature of the deposit on the probe, as described above.

The circular cross-section of the probe 30 ensures that there is no problem concerning orientation of the probe when mounted on wall 40 of the plant being monitored, as the bending response will be the same in all orientations of the cylinder defining the probe.

This circular form of the probe is also particularly suitable for an omni-directional incidence of the deposit, for example in the case of a water monitoring system where the deposit will precipitate from the water around the probe. In other cases it may be desirable to vary the cross-section of the elongate probe either for adapting it to the particular geometry of the location where the probe is installed, or to adapt it to a known direction of arrival of the deposit. For example, in the case of a soot monitoring application it may be advantageous to provide the probe in the form of a plate or a paddle on the end of an arm, where the plate or paddle has a plane extending generally perpendicular to the direction of incidence of the deposit, in order to catch as much of the deposit as is possible.

Cross-sections other than circular or plate-shaped are possible depending on the requirements of the environment to be monitored.

The down-line operation which may be controlled in response to the output of the sensor can be any one of a number of different operations, as indicated above, but equally the manner in which that control is exercised can also be in one of various different forms.

As a first possibility the output of the sensor can be used to display a signal which can be interpreted by an operator who then changes the rate of execution of the down line operation (for example the rate of dosing of a paper mill with a composition which inhibits the growth of biological film therein) in order to maintain optimum conditions, in response to the information portrayed by the displayed signal indicative of deposition quantity. Such a system could be referred to as a semi-automatic control system.

A second basic form of the control may be an automatic one which relies on direct application of the output from the sensor to the speed control or displacement control of a pump in order to vary the rate of dosing, for example by changing the speed or by varying the displacement, of the pump. Such a system responds purely to the actual acquisition of build-up with time and may rely on a control regime which effectively plots total build-up of deposit against time and reacts to that build-up.

A third, more intelligent, automatic control regime may be one in which the controller assesses the general trend of the deposition signal to detect whether the rate of increase is itself increasing or reducing, in order to increase the dosing rate more noticeably in the case of a rising rate of build-up of deposit and to reduce the dosing rate when the rate of change of build-up quantity is itself reducing. Such a system allows a measure of prediction of future build-up value and is therefore to some extent predictive rather than purely reactive.

A still further version of an "intelligent" automatic control regime may be one which combines the second and the third regimes mentioned above, i.e. part of the control action is in response to the actual quantity of build-up, and part is in response to the trend of the change in build-up, for example by comparing the actual rate of change with a predicted "expected" rate of change.

The hardware for effecting the "intelligent" third and fourth control regimes just mentioned may rely on a programmable logic controller (plc) to be programmed with software to exercise the appropriate control over the downline (e.g. dosing) operation.

If the output of the strain gauges is plotted over a period of days, there will be a two or three days period before the signal is evident (i.e. before any appreciable build-up of deposit has occurred) and then the signal will gradually rise to a plateau indicating a build-up consistent with the need for it to be eliminated by remedial action in the process under control.

## Claims

1. A method of measuring the build-up of deposit comprising the steps of:-
mounting an elongate probe (30; 70) to project into a region where the build-up will appear;
balancing the probe about a pivot (32; 72) in the absence of deposit on the projecting probe;
allowing the deposit to build up on the projecting portion of said probe; and
sensing lateral deflection of said projecting portion of the probe at said pivot to detect variations in the mass of said probe as being indicative of the build-up of said deposit on the projecting portion of the probe;
characterized in that the lateral deflection of said projecting portion is sensed by changing strain on a flexible member (45; 84) caused to flex by the imbalance generated in said probe as a result of the deposit thereon.

2. A method according to claim 1, characterized in that said monitoring of the probe is effected by static measurement of the moment on the probe.

3. A method according to claim 1, characterized in that the probe (70) is mounted in cantilever fashion and the variations in the mass of the probe are detected by measuring the strain of the cantilever mounting (72).

4. A method according to claim 1, characterized in that the monitoring of the build-up is effected by monitoring the amplitude of lateral vibration of the probe.

5. A method according to any one of the preceding claims, characterized in that the mass of said probe is detected by monitoring the lateral vibration in said probe in response to natural machine vibrations in said region where the build-up will appear, and detecting the frequency of the natural lateral vibrations of the probe to evaluate the mass of the combination of the probe and deposit thereon by detecting the resonant frequency of vibration thereof.

6. A method according to any one of claims 1 to 5, when used in an industrial apparatus, characterised by the step of controlling the dose of the application of a deposit-inhibiting composition in response to the mass variations detected.

7. A method according to claim 6, characterised by including the steps of selecting one of several deposit-inhibiting compositions to be added to said region, and further including providing a sensor (88) responsive to the nature of the deposit on the probe, and selecting a said deposit-controlling composition to be most effective for the nature of the deposition identified.

8. A method according to claim 6, characterised by including the steps of displaying a signal representative of the detected mass variation of said probe, and adjusting the dose of the application of said composition in response to the signal displayed.

9. A method according to claims 6, characterised by including the steps of determining the rate of change of build-up with time, and comparing the determined rate of change with an expected rate of change, to increase or decrease the rate of dosing in response to a rise or a fall in the rate of build-up with time.

10. A method according to claim 6, characterized in that the rate of dosing is at least partially controlled in direct response to the build-up detected by the probe.

11. A sensor for determining the build-up of a deposit in industrial equipment, comprising:-
an elongate probe (30; 70) having a proximal end and a distal end and adapted to be installed with said distal end in a region of the equipment where monitoring is to be effected; and
a pivot support (32; 72) for said probe;
characterized by:-
a flexurally deformable member (45; 84) arranged to be strained flexurally by pivoting of said probe about said pivot support;
at least one strain gauge (46, 46'; 82, 82') for measuring the flexural strain of said flexurally deformable member (45, 45'; 84) in response to the weight of the probe and any accretion of deposit built up thereon; and
means for monitoring the magnitude of the flexural strain continuously through the life of the plant.

12. A sensor according to claim 11, characterized in that said pivot support (72) is adjacent said proximal end of the probe (70) and includes said flexurally deformable member (84) carrying the strain gauges (82, 82').

13. A sensor according to claim 12, characterized in that said flexurally deformable member (84) is a diaphragm.

14. A sensor according to claim 13, characterized in that said diaphragm is cruciform in shape and has the probe (70) mounted at the intersection of the arms of the cross and is itself supported by clamping at the ends (74) of the arms of the cross.

15. A sensor according to claim 11, characterized in that said probe (30; 70) is cylindrical in cross-section.

16. A sensor according to any one of claims 11 to 15, characterised by including
a mounting body (31) adapted to be secured to the exterior of a wall (36) of plant to be monitored; and
bearing means (32) pivotally supporting said probe (30) in said mounting body, to project transverse to the extent of a said wall (36) on which the mounting body can be mounted, said deformable member (45) being adapted to be contacted by a part (44) of the pivotal probe near the bearing means to deform the flexible member flexurally in response to pivoting of the probe.

17. A sensor according to any one of claims 11 to 15, characterised by including mounting means for permitting the probe to vibrate in angular oscillation about a datum position, and means for measuring the instantaneous strain of the mounting means for measuring the vibration characteristics of the probe with any deposit thereon.

18. A sensor according to any one of claims 11 to 15, characterised by further including circuitry (50) comprising a bridge (61) connected to several said strain gauges for providing an output signal which can be directly related to the flexural strain in the probe.

19. A sensor according to claim 18, characterised by including :-
a printed circuit board (47, 48) on which said circuitry is mounted, said printed circuit board being attached within the mounting body; and
connectors on said printed circuit board which receive signals from said at least one strain gauge and which pass output signals to the exterior of said mounting body (31) by way of a waterproof connector (51).

20. A sensor according to claim 18, characterized in that said circuitry includes a differential amplifier (63) receiving on a first input (+) an out-of-balance signal from said bridge (61), and on a second input (-) a modified form of said out-of-balance signal in which the static component of said out-of-balance signal has been attenuated, whereby the output from said differential amplifier has the transient component attenuated in order to suppress the effects of vibration on the strain gauge signal.

21. A sensor according to claim 20, characterized in that said modified form of the out-of-balance signal is applied to the second input of the differential amplifier by way of a resistor-capacitor network (65, 64) for attenuating the static component of the signal.

22. A sensor according to claim 20, characterised by including a further amplifier (60) for amplifying the out-of-balance signal from said bridge (61) before splitting between said first (+) and second (-) inputs of the differential amplifier.

## Patentansprüche

1. Ein Verfahren zum Messen des Aufbaues einer Ablagerung mit den folgenden Schritten:
Anordnen einer langgestreckten Sonde (30; 70), so daß diese in einen Bereich vorsteht, wo der Aufbau stattfinden wird;
Ausbalancieren der Sonde um einen Schwenkpunkt (32; 72) bei fehlender Abscheidung auf der vorstehenden Sonde;
Erlauben, daß die Abscheidung sich auf dem vorstehenden Abschnitt der Sonde aufbaut; und
Erfassen einer lateralen Auslenkung des vorstehenden Abschnittes der Sonde an dem Schwenkpunkt, um Änderungen in der Masse der Sonde zu erkennen, welche den Aufbau der Abscheidung auf dem vorstehenden Abschnitt der Sonde anzeigen,
dadurch gekennzeichnet, daß die laterale Auslenkung des vorstehenden Abschnittes durch Änderung einer Belastung an einem flexiblen Bauteil (45; 84) erfaßt wird, welches durch eine Unbalance ausgelenkt wird, die in der Sonde als Ergebnis der Abscheidung hierauf erzeugt wird.

2. Ein Verfahren nach Anspruch 1, dadurch gekennzeichnet, daß die Überwachung der Sonde durch statische Messung des Momentes an der Sonde durchgeführt wird.

3. Ein Verfahren nach Anspruch 1, dadurch gekennzeichnet, daß die Sonde (70) nach Art eines Auslegers angeordnet ist und daß die Änderungen in der Masse der Sonde durch Messung der Belastung an der Auslegerbefestigung (72) erfaßt werden.

4. Ein Verfahren nach Anspruch 1, dadurch gekennzeichnet, daß die Überwachung des Aufbaues durch Überwachung der Amplitude der lateralen Vibration der Sonde durchgeführt wird.

5. Ein Verfahren nach einem der vorhergehenden Ansprüche, dadurch gekennzeichnet, daß die Masse der Sonde durch Überwachung der lateralen Vibration in der Sonde in Antwort auf natürliche Maschinenvibrationen in dem Bereich, wo der Aufbau stattfinden wird, erfaßt wird und durch Erkennen der Frequenz der natürlichen lateralen Vibrationen der Sonde, um die Masse aus der Kombination der Sonde und der Abscheidung hierauf durch Erkennen der Resonanzfrequenz der Vibration hiervon zu ermitteln.

6. Ein Verfahren nach einem der Ansprüche 1 bis 5 zur Anwendung in einer industriellen Vorrichtung, gekennzeichnet durch den Schritt des Steuerns der Dosierung der Aufbringung einer die Abscheidung hemmenden Zusammensetzung in Antwort auf die erfaßten Massenschwankungen.

7. Ein Verfahren nach Anspruch 6, dadurch gekennzeichnet, daß es die Schritte des Auswählens einer aus mehreren abscheidungshemmenden Zusammensetzungen zur Hinzufügung zu dem Bereich aufweist und weiterhin das Bereitstellen eines Sensors (88) beinhaltet, der auf die Art der Abscheidung an der Sonde anspricht und durch das Auswählen einer die Abscheidung steuernden Zusammensetzung, welche für die Art der identifizierten Abscheidung am meisten wirksam ist.

8. Ein Verfahren nach Anspruch 6, dadurch gekennzeichnet, daß sie die Schritte des Anzeigens eines Signales, welches die erkannte Massenänderung der Sonde wiedergibt und das Einstellen der Dosis der Aufbringung der Zusammensetzung in Antwort auf das angezeigte Signal beinhaltet.

9. Ein Verfahren nach Anspruch 6, dadurch gekennzeichnet, daß es die Schritte des Bestimmens der Änderungsrate des Aufbaus während der Zeit und das Vergleichen der bestimmten Änderungsrate mit einer erwarteten Änderungsrate aufweist, um die Rate der Dosierung in Antwort auf ein Ansteigen oder Absinken der Aufbaurate während der Zeit zu erhöhen oder zu verringern.

10. Ein Verfahren nach Anspruch 6, dadurch gekennzeichnet, daß die Dosierungsrate zumindest teilweise in direkter Antwort auf den von der Sonde erfaßten Aufbau gesteuert wird.

11. Ein Sensor zur Bestimmung des Aufbaues einer Abscheidung in einer industriellen Anlage, mit:
einer langgestreckten Sonde (30; 70) mit einem proximalen Ende und einem distalen Ende, welche dafür ausgelegt ist, mit dem distalen Ende in einem Bereich der Anlage angeordnet zu werden, wo die Überwachung durchzuführen ist; und
einer Schwenklagerung (32; 72) für die Sonde,
gekennzeichnet durch:
ein biegeverformbares Bauteil (45; 84), welches so angeordnet ist, daß es durch Schwenkung der Sonde um die Schwenklagerung auf Biegung belastbar ist;
wenigstens ein Belastungsmeßgerät (46, 46'; 82, 82'), zur Messung der Biegebelastung des biegeverformbaren Bauteiles (45, 45'; 84) in Antwort auf das Gewicht der Sonde und irgendeiner Zunahme der sich hieran aufbauenden Abscheidung; und
Mittel zum Überwachen der Größe der Biegebelastung fortlaufend während der Lebensdauer der Anlage.

12. Ein Sensor nach Anspruch 11, dadurch gekennzeichnet, daß die Schwenklagerung (72) benachbart dem proximalen Ende der Sonde (70) ist und das biegeverformbare Bauteil (84) beinhaltet, welches die Belastungsmeßgeräte (82, 82') trägt.

13. Ein Sensor nach Anspruch 12, dadurch gekennzeichnet, daß das biegeverformbare Bauteil (84) eine Membran ist.

14. Ein Sensor nach Anspruch 13, dadurch gekennzeichnet, daß die Membran eine Kreuzform hat und die Sonde (70) am Schnittpunkt der Arme des Kreuzes gelagert hat und selbst durch Festklemmen der Enden (74) der Arme des Kreuzes gelagert ist.

15. Ein Sensor nach Anspruch 11, dadurch gekennzeichnet, daß die Sonde (30; 70) im Querschnitt zylindrisch ist.

16. Ein Sensor nach einem der Ansprüche 11 bis 15, dadurch gekennzeichnet, daß er aufweist:
einen Befestigungskörper (31), der dafür ausgelegt ist, an der Außenseite einer Wand (36) der zu überwachenden Anlage festgelegt zu werden; und
Lagermittel (32), welche die Sonde (30) schwenkbeweglich in dem Befestigungskörper lagern, um quer zum Verlauf der Wand (36) vorzustehen, an welchem der Befestigungskörper anordenbar ist, wobei das verformbare Bauteil (45) dafür ausgelegt ist, von einem Teil (44) der schwenkbeweglichen Sonde nahe den Lagermitteln berührt zu werden, um das verformbare Bauteil in Antwort auf eine Schwenkung der Sonde auf Biegung zu verformen.

17. Ein Sensor nach einem der Ansprüche 11 bis 15, dadurch gekennzeichnet, daß er Befestigungsmittel aufweist, um es der Sonde zu ermöglichen, in einer Winkeloszillation um eine Bezugsposition zu vibrieren und Mittel aufweist zum Messen der unmittelbaren Belastung der Befestigungsmittel zum Messen der Vibrationseigenschaften der Sonde mit irgendeiner Abscheidung hierauf.

18. Ein Sensor nach einem der Ansprüche 11 bis 15, dadurch gekennzeichnet, daß er weiterhin einen Schaltkreis (50) mit einer Brücke (61) beinhaltet, welche mit verschiedenen der Belastungsmeßgeräte verbunden ist, um ein Ausgangssignal bereitzustellen, welches direkt der Biegebelastung in der Sonde zugeordnet werden kann.

19. Ein Sensor nach Anspruch 18, gekennzeichnet durch:
eine gedruckte Schaltkreiskarte (47, 48), auf der der Schaltkreis angeordnet ist, wobei die gedruckte Schaltkreiskarte innerhalb des Befestigungskörpers angebracht ist; und
Verbinder auf der gedruckten Schaltkreiskarte, welche Signale von dem wenigstens einen Belastungsmeßgerät erhalten und welche Ausgangssignale zur Außenseite des Befestigungskörpers (31) über einen wasserdichten Verbinder (51) führen.

20. Ein Sensor nach Anspruch 18, dadurch gekennzeichnet, daß der Schaltkreis einen Differentialverstärker (63) aufweist, der an einem ersten Eingang (+) ein Außer-Balance-Signal von der Brücke (61) und an einem zweiten Eingang (-) eine modifizierte Form des Außer-Balance-Signales empfängt, in welchem die statische Komponente des Außer-Balance-Signales gedämpft wurde, wobei der Ausgang von dem Differentialverstärker eine gedämpfte Stoßkomponente hat, um die Vibrationseffekte in dem Belastungsmessgerät-Signal zu unterdrücken.

21. Ein Sensor nach Anspruch 20, dadurch gekennzeichnet, daß die modifizierte Form des Außer-Balance-Signales dem zweiten Eingang des Differentialverstärkers mittels eines Widerstand/Kondensator-Netzwerkes (65, 64) zur Dämpfung der statischen Komponente des Signales zugeführt wird.

22. Ein Sensor nach Anspruch 20, dadurch gekennzeichnet, daß er einen weiteren Verstärker (60) zum Verstärken des Außer-Balance-Signales von der Brücke (61) aufweist, bevor dieses zwischen den ersten (+) und zweiten (-) Eingängen des Differentialverstärkers aufgespalten wird.

## Revendications

1. Procédé de mesure de l'accumulation d'un dépôt, comprenant les étapes de :
montage d'une sonde allongée (30;70) de sorte qu'elle fasse saillie dans une région où l'accumulation doit apparaître ;
équilibrage de la sonde autour d'un pivot (32; 72) en l'absence de dépôt sur la sonde en saillie ;
attente d'une accumulation du dépôt sur la partie en saillie de ladite sonde ; et
détection de la flexion latérale de ladite partie en saillie de la sonde à l'endroit dudit pivot pour détecter les variations de la masse de ladite sonde qui sont indicatives de l'accumulation dudit dépôt sur la partie en saillie de la sonde ;
caractérisé en ce que la flexion latérale de ladite partie en saillie est détectée par le changement de contrainte sur un élément flexible (45;84) soumis à une flexion par le déséquilibre engendré dans ladite sonde comme résultat du dépôt sur la sonde.

2. Procédé suivant la revendication 1, caractérisé en ce que ladite surveillance de la sonde est effectuée par mesure statique du couple sur la sonde.

3. Procédé suivant la revendication 1, caractérisé en ce que la sonde (70) est montée en porte-à-faux et les variations de la masse de la sonde sont détectées par mesure de la contrainte de la fixation en porte-à-faux (72).

4. Procédé suivant la revendication 1, caractérisé en ce que la surveillance de l'accumulation est effectuée par mesure de l'amplitude de la vibration latérale de la sonde.

5. Procédé suivant une quelconque des revendications précédentes, caractérisé en ce que la masse de ladite sonde est détectée par surveillance de la vibration latérale de ladite sonde en réponse aux vibrations naturelles de la machine dans ladite région où l'accumulation doit apparaître,et détection de la fréquence des vibrations latérales naturelles de la sonde pour évaluer la masse de la combinaison de la sonde et du dépôt sur celle-ci par détection de la fréquence de résonance de sa vibration.

6. Procédé suivant une quelconque des revendications 1 à 5, lorsqu'il est utilisé dans un appareil industriel, caractérisé par l'étape de commande de la dose d'application d'une composition anti-dépôt en réponse aux variations de masse détectées.

7. Procédé suivant la revendication 6, caractérisé en ce qu'il comprend les étapes de sélection d'une de plusieurs compositions anti-dépôt à ajouter dans ladite région, et il comprend en outre l'utilisation d'un capteur (88) sensible à la nature du dépôt sur la sonde, et la sélection d'une dite composition anti-dépôt qui est la plus efficace pour la nature du dépôt identifiée.

8. Procédé suivant la revendication 6, caractérisé en ce qu'il comprend les étapes d'affichage d'un signal représentatif de la variation de masse détectée de ladite sonde, et de réglage de la dose d'application de ladite composition en réponse au signal affiché.

9. Procédé suivant la revendication 6, caractérisé en ce qu' il comprend les étapes de détermination de la vitesse de variation de l'accumulation de dépôt en fonction du temps, et de comparaison de la vitesse de variation déterminée avec une vitesse de variation prévue, afin d'augmenter ou de diminuer le débit de dosage en réponse à une augmentation ou une diminution de la vitesse d'accumulation dans le temps.

10. Procédé suivant la revendication 6, caractérisé en ce que le débit de dosage est au moins partiellement commandé en réponse directe à l'accumulation de dépôt détectée par la sonde.

11. Capteur pour déterminer l'accumulation d'un dépôt dans un équipement industriel, comprenant :
une sonde allongée (30;70) ayant une extrémité proximale et une extrémité distale, prévue pour être installée de sorte que ladite extrémité distale se trouve dans une région de l'équipement où on veut effectuer une surveillance ; et
un pivot (32:72) de support de ladite sonde ;
caractérisé en ce qu'il comprend :
un élément déformable en flexion (45;84) agencé de manière à être sollicité en flexion par le pivotement de ladite sonde autour dudit pivot de support ;
au moins une jauge de contrainte (46,46';82,82') pour mesurer la contrainte de flexion dudit élément déformable en flexion (45,45';84) en réponse au poids de la sonde et de tout dépôt accumulé sur la sonde ; et
des moyens de surveillance continue de la grandeur de la contrainte de flexion pendant toute la vie de l'installation.

12. Capteur suivant la revendication 11, caractérisé en ce que ledit pivot de support (72) est adjacent à ladite extrémité proximale de la sonde (70) et comprend ledit élément déformable en flexion (84) portant les jauges de contrainte (82,82').

13. Capteur suivant la revendication 12, caractérisé en ce que ledit élément déformable en flexion (84) est une membrane.

14. Capteur suivant la revendication 13, caractérisé en ce que ladite membrane est cruciforme, et la sonde (70) est montée à l'intersection des bras de la croix, et la membrane est elle-même supportée par blocage aux extrémités (74) desbras de la croix.

15. Capteur suivant la revendication 11, caractérisé en ce que ladite sonde (30;70) est cylindrique en section transversale.

16. Capteur suivant une quelconque des revendications 11 à 15, caractérisé en ce qu'il comprend :
une monture (31) prévue pour être fixée à l'extérieur d'une paroi (36) d'une installation à surveiller ; et
des moyens de support (32) qui supportent de façon pivotante ladite sonde (30) dans ladite monture, de sorte qu'elle fasse saillie transversalement à l'étendue d'une dite paroi (36) sur laquelle la monture peut être fixée, ledit élément déformable (45) étant prévu pour être attaqué par une partie (44) de la sonde pivotante près des moyens de support de façon à déformer l'élément flexible en flexion en réponse au pivotement de la sonde.

17. Capteur suivant une quelconque des revendications 11 à 15, caractérisé en ce qu'il comprend des moyens de montage pour permettre à la sonde de vibrer en oscillation angulaire autour d'une position de référence, et des moyens de mesure de la contrainte instantanée des moyens de montage afin de mesurer les caractéristiques de vibration de la sonde portant un dépôt.

18. Capteur suivant une quelconque des revendications 11 à 15, caractérisé en ce qu'il comprend en outre un circuit (50) comportant un pont (61) connecté à plusieurs dites jauges de contrainte pour fournir un signal.de sortie qui peut être directement corrélé à la contrainte de flexion de la sonde.

19. Capteur suivant la revendication 18, caractérisé en ce qu'il comprend :
une carte de circuit imprimé (47,48) sur laquelle ledit circuit est monté, ladite carte de circuit imprimé étant fixée à l'intérieur de la monture; et
des connecteurs sur ladite carte de circuit imprimé qui reçoivent des signaux de ladite au moins une jauge de contrainte et qui transmettent les signaux de sortie à l'extérieur de ladite monture (31) par l'intermédiaire d'un connecteur étanche (51).

20. Capteur suivant la revendication 18, caractérisé en ce que ledit circuit comprend un amplificateur différentiel (63) recevant, sur une première entrée (+), un signal de déséquilibre dudit pont (61) et, sur une deuxième entrée (-) , une forme modifiée dudit signal de déséquilibre dont la composante statique dudit signal de déséquilibre a été atténuée, de sorte que la sortie dudit amplificateur différentiel contient la composante transitoire atténuée afin de supprimer les effets de la vibration sur le signal de la jauge de contrainte.

21. Capteur suivant la revendication 20, caractérisé en ce que ladite forme modifiée du signal de déséquilibre est appliquée à la deuxième entrée de l'amplificateur différentiel par l'intermédiaire d'un circuit résistance-condensateur (65,64) pour atténuer la composante statique du signal.

22. Capteur suivant la revendication 20, caractérisé en ce qu'il comprend un autre amplificateur (60) pour amplifier le signal de déséquilibre dudit pont (61) avant la séparation entre lesdites première (+) et deuxième (-) entrées de l'amplificateur différentiel.
